(19) 

**Europäisches Patentamt**
**European Patent Office**
**Office européen des brevets**

(11) **EP 4 687 046 A1**

(12) **EUROPEAN PATENT APPLICATION**

(43) Date of publication:
**04.02.2026 Bulletin 2026/06**

(21) Application number: **25192031.0**

(22) Date of filing: **28.07.2025**

(51) International Patent Classification (IPC):
**G06F 16/242** (2019.01)  **G06F 16/2452** (2019.01)
**G06F 16/2458** (2019.01)

(52) Cooperative Patent Classification (CPC):
**G06F 16/24522; G06F 16/243; G06F 16/2474;
G06F 16/2477**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **01.08.2024 IN 202421058403**

(71) Applicant: **Tata Consultancy Services Limited
Maharashtra (IN)**

(72) Inventors:
• **MAJMUDAR, Ninad Mrudulkumar
411057 Pune, Maharashtra (IN)**
• **RUNKANA, Venkataramana
411028 Pune, Maharashtra (IN)**

(74) Representative: **Goddar, Heinz J.
Boehmert & Boehmert
Anwaltspartnerschaft mbB
Pettenkoferstrasse 22
80336 München (DE)**

(54) **METHOD AND SYSTEM FOR ARTIFICIAL INTELLIGENCE (AI) BASED ALARM MANAGEMENT**

(57)    The present disclosure provides an artificial intelligence-based alarm management based on structured time series data and unstructured contextual information where the conventional methods fails to do. Initially, the system receives a user query associated with an industry automation system and classifies into one of a) data request query b) an anomaly detection and diagnosis query c) a log request query and d) feedback for previous response using a query classifier. Simultaneously, the user query is converted into an associated timeseries query representation. Furthermore, a plurality of database queries is generated based on the timeseries query representation using query generator. Further, data pertaining to the user query is retrieved from an associated database based on database queries using Deep Learning models, thereby identifying a critical alarm, and to take appropriate actions if there is any anomaly. Finally, the retrieved data is displayed to the user in a user readable format.

FIG. 1B

**Description**

CROSS-REFERENCE TO RELATED APPLICATIONS AND PRIORITY

The present application claims priority to Indian application no. 202421058403, filed on August 01, 2024.

TECHNICAL FIELD

The disclosure herein generally relates to the field of monitoring and controlling industrial processes and systems using data science and, more particularly, to a method and system for Artificial Intelligence (AI) based alarm management.

BACKGROUND

Industrial processes gather a large amount of data through various sensors recorded via systems such as Supervisory Control and Data Acquisition (SCADA) and Distributed Control System (DCS). Such systems are installed in control rooms where trained operators manage operations through real-time monitoring, process control, responding to alarms and data analysis. However, processing enormous amounts of data and identifying critical alarms remains a challenge in the DCS environment. Since numerous alarms are raised continuously due to various disturbances and dynamic nature of manufacturing operations, it becomes difficult to identify and distinguish critical alarms that require immediate actions. This can be addressed using deep learning (DL) based algorithms. However, enterprises do not like to expose their data to cloud and Large Language Model (LLM) Providers for data analysis due to confidentiality and security reasons. At the same time, they do not usually install large enough hardware to run various DL and natural language processing (NLP) algorithms locally.

For converting natural language to database queries, conventional methods mainly focus on relational databases and less attention has been paid to timeseries databases. Further, the conventional models either require multiple parallel models or have a massive model size that cannot run on low-resource devices. Furthermore, for unsupervised multivariate timeseries anomaly detection and diagnosis, research has been done using various DL-based algorithms, but their focus is only on the structured timeseries datasets. In the real world, there are loads of contextual data available. However, conventional methods fail to leverage the contextual data to perform anomaly detection and diagnosis, and to identify and distinguish critical alarms from non-critical alarms.

SUMMARY

Embodiments of the present disclosure present technological improvements as solutions to one or more of the above-mentioned technical problems recognized by the inventors in conventional systems. For example, in one embodiment, a method for Artificial Intelligence (AI) based alarm management is provided. The method includes receiving, via one or more hardware processors, a user query associated with an industry automation system, wherein the user query is in Natural Language (NL). Further, the method includes classifying via the one or more hardware processors, the user query into one of a) data request query b) an anomaly detection and diagnosis query c) a log request query and d) a feedback for previous response using a query classifier. Furthermore, the method includes simultaneously converting via the one or more hardware processors, the user query into an associated timeseries query representation using a sequence-to-sequence model. Furthermore, the method includes generating via the one or more hardware processors, a plurality of database queries based on the timeseries query representation using query generator, wherein the plurality of database queries comprises a multivariate timeseries database query and a relational database query. Furthermore, the method includes retrieving via the one or more hardware processors, a data pertaining to the user query from an associated database from a plurality of databases based on an associated plurality of database queries and a classification information, wherein the retrieved data is in one of a) structured data format and b) an unstructured data format, wherein the retrieved data comprises one of a) a general information b) an anomaly information and c) a log information, wherein the plurality of databases comprises a timeseries databases and a relational database, and wherein the anomaly information is used to identify a critical alarm and to take appropriate actions. Finally, the method includes displaying via the one or more hardware processors, the retrieved data to the user by converting into a user readable format using an associated data conversion technique, wherein the unstructured data format is converted into user readable format using a Natural Language Processing (NLP) technique and the structured timeseries data is converted in the form of text, tables and graphs.

In another aspect, a system for Artificial Intelligence (AI) based alarm management is provided. The system includes at least one memory storing programmed instructions, one or more Input/Output (I/O) interfaces, and one or more hardware processors operatively coupled to the at least one memory, wherein the one or more hardware processors are configured by the programmed instructions to receive a user query associated with an industry automation system, wherein the user query is in Natural Language (NL). Further, the one or more hardware processors are configured by the programmed instructions to classify the user query into one of a) data request query b) an anomaly detection and diagnosis query c) a log request query and d) a feedback for previous response using a query classifier. Furthermore, one or more hardware processors are configured by the programmed instructions to simultaneously convert the user query into an associated timeseries query representation using a sequence-to-sequence model. Furthermore, the one or more hardware processors are configured by the programmed instructions to generate a plurality of database queries based on the timeseries query representation using query generator, wherein the plurality of database queries comprises a multivariate timeseries database query and a relational database query. Furthermore, the one or more hardware processors are configured by the programmed instructions to retrieve a data pertaining to the user query from an associated database from a plurality of databases based on an associated plurality of database queries and a classification information, wherein the retrieved data is in one of a) structured data format and b) an unstructured data format, wherein the retrieved data comprises one of a) a general information b) an anomaly information and c) a log information, wherein the plurality of databases comprises a timeseries databases and a relational database, and wherein the anomaly information is used to identify a critical alarm and to take appropriate actions. Finally, the one or more hardware processors are configured by the programmed instructions to display the retrieved data to the user by converting into a user readable format using an associated data conversion technique, wherein the unstructured data format is converted into user readable format using a Natural Language Processing (NLP) technique and the structured timeseries data is converted in the form of text, tables and graphs.

In yet another aspect, a computer program product including a non-transitory computer-readable medium embodied therein a computer program for Artificial Intelligence (AI) based alarm management is provided. The computer readable program, when executed on a computing device, causes the computing device to receive a user query associated with an industry automation system, wherein the user query is in Natural Language (NL). Further, the computer readable program, when executed on a computing device, causes the computing device to classify the user query into one of a) data request query b) an anomaly detection and diagnosis query c) a log request query and d) a feedback for previous response using a query classifier. Furthermore, the computer readable program, when executed on a computing device, causes the computing device to simultaneously convert the user query into an associated timeseries query representation using a sequence-to-sequence model. Furthermore, the computer readable program, when executed on a computing device, causes the computing device to generate a plurality of database queries based on the timeseries query representation using query generator, wherein the plurality of database queries comprises a multivariate timeseries database query and a relational database query. Furthermore, the computer readable program, when executed on a computing device, causes the computing device to retrieve a data pertaining to the user query from an associated database from a plurality of databases based on an associated plurality of database queries and a classification information, wherein the retrieved data is in one of a) structured data format and b) an unstructured data format, wherein the retrieved data comprises one of a) a general information b) an anomaly information and c) a log information, wherein the plurality of databases comprises a timeseries databases and a relational database, and wherein the anomaly information is used to identify a critical alarm and to take appropriate actions. Finally, the computer readable program, when executed on a computing device, causes the computing device to display the retrieved data to the user by converting into a user readable format using an associated data conversion technique, wherein the unstructured data format is converted into user readable format using a Natural Language Processing (NLP) technique and the structured timeseries data is converted in the form of text, tables and graphs.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A is a functional block diagram of a system for Artificial Intelligence (AI) based alarm management, in accordance with some embodiments of the present disclosure.
FIG. 1B illustrates overall functional architecture of the system for the AI based alarm management, in accordance with some embodiments of the present disclosure.
FIG. 2 illustrates a flow diagram for a processor implemented method for AI based alarm management, in accordance with some embodiments of the present disclosure.
FIG. 3 illustrates an example architecture for converting Natural Language (NL) query to timeseries database query for the processor implemented method for AI based alarm management, in accordance with some embodiments of the present disclosure.
FIG. 4 illustrates an example flow diagram for synthetic dataset creation for the processor implemented method for AI based alarm management, in accordance with some embodiments of the present disclosure.

FIG. 5A, 5B and 5C illustrate an example flow diagram for anomaly detection and diagnosis for the processor implemented method for AI based alarm management, in accordance with some embodiments of the present disclosure.

FIGS. 6A and 6B illustrate an example encoder-decoder architecture for anomaly detection and diagnosis for the processor implemented method for AI based alarm management, in accordance with some embodiments of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

In today's highly interconnected world, the smooth functioning of industrial operations is critical, wherein systems such as Supervisory Control and Data Acquisition (SCADA) and Distributed Control System (DCS) are vital for enabling real-time monitoring and control across various industries. Critical responsibilities of control room operators include the following:

Real-Time Monitoring - Continuous vigilance of SCADA or DCS systems to detect anomalies and deviations from desired conditions. Tracking critical parameters like temperature, pressure, and flow rate.

Control and Adjustment - Authority to instantly modify process variables. Altering setpoints, manipulating valves, and starting/stopping equipment to maintain optimal operations.

Alarm Management - Quick acknowledgement and response to SCADA alarms indicating abnormal conditions. Distinguishing between minor and severe alarms needing urgent attention.

Data Analysis - Utilizing historical information and trends to analyse process performance. Identifying patterns and potential problems to optimise systems.

However, control room operators across various industries face numerous challenges in managing and responding to these complex and real-time operations. This is because of multiple reasons, including:

- Processing enormous amounts of data from sensors, alarms, and screens is demanding. Operators must filter out irrelevant information to identify critical patterns, trends, and alarms. They need the correct information at the right time - be it current or from historical trends.
- Facing Difficulty in extracting the required data from the Historian, which is dependent on the use of complex interfaces and/or defining and running custom queries against the Historian.
- Challenges in effectively prioritising and responding to copious SCADA alarms.
- Time-consuming activities like Summary of Alerts raised, operations of the prior shift, Area Logs, Hand-over Comments, and Root Cause Analysis, if any

Further, there are loads of contextual data available in the control room operating environment, especially unstructured alarms and event datasets and the experience of the operators, which can be leveraged in addition to structured timeseries dataset of sensors, in order to perform anomaly detection and diagnosis and to identify and distinguish critical alarms from non-critical alarms.

Hardly, research in developing lightweight systems enabling non-expert operators to interact in natural language with sensors, alarms and events is being explored. Such lightweight systems enhance and ease the process of obtaining data insights for identifying critical alarms and enable performing various analyses like anomaly detection and diagnosis locally.

To overcome the challenges of the conventional approaches, embodiments herein provide a method and system for Artificial Intelligence (AI) based alarm management. The present disclosure serves two objectives: (i) Allows control operators to converse with data in Natural Language (NL), wherein they can retrieve the correct information at the right time through natural language conversations and (ii) Can also answer queries based on Timeseries-based analysis - like Anomaly Detection and Diagnosis by looking at Historian data holistically-both Structured and Unstructured Information.

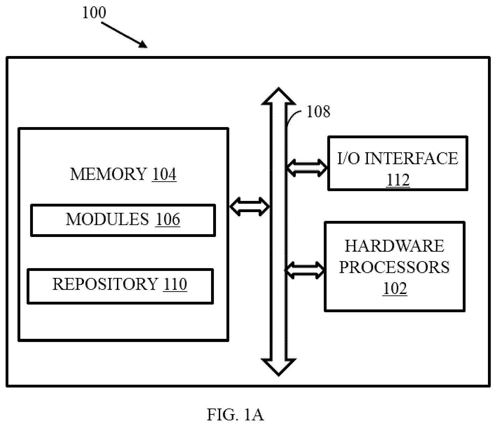

Referring now to the drawings, more particularly to FIG. 1A through FIG. 6B, where similar reference characters denote corresponding features consistently throughout the figures, there are shown preferred embodiments, and these embodiments are described in the context of the following exemplary system and/or method.

FIG. 1A is a functional block diagram of system 100 for AI based alarm management, in accordance with some embodiments of the present disclosure. The system 100 includes or is otherwise in communication with hardware processors 102, at least one memory such as a memory 104, an Input /Output (I/O) interface 112. The hardware processors 102, memory 104, and the I/O interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, memory 104 includes a plurality of modules 106. Memory 104 also includes a data repository (or repository) 110 for storing data processed, received, and generated by the plurality of modules 106.

The plurality of modules 106 includes programs or coded instructions that supplement applications or functions performed by the system 100 for AI based alarm management. The plurality of modules 106, amongst other things, can include routines, programs, objects, components, and data structures, which perform particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for AI based alarm management.

The data repository (or repository) 110 may include a plurality of abstracted pieces of code for refinement and data that is processed, received, or generated as a result of the execution of the plurality of modules in the module(s) 106.

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory, a Relational Database Management System (RDBMS) and a Timeseries Database.

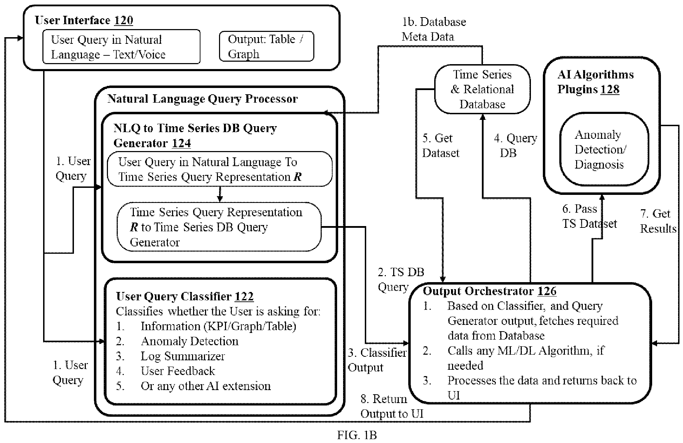

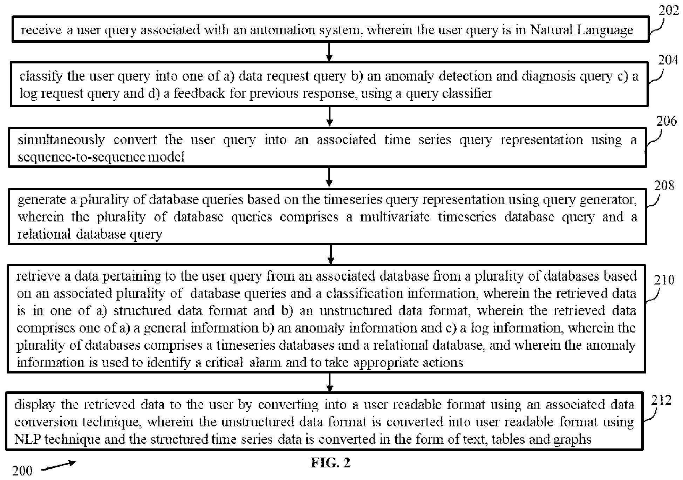

The overall architecture of the system of FIG. 1A is explained in conjunction with FIG. 1B. Now referring to FIG. 1B, initially, the system receives a user query associated with an industry automation system using a user interface. Further, the user query is classified into one of a) data request query b) an anomaly detection and diagnosis query c) a log request query and d) feedback for previous response using a query classifier. Simultaneously, the user query is converted into an associated timeseries query representation using a sequence-to-sequence model associated with a Natural Language Query (NLQ) to timeseries database query generator. Furthermore, a plurality of database queries is generated based on the timeseries query representation using the said query generator, wherein the plurality of database queries comprises a multivariate timeseries database query and a relational database query. After generating database queries, a data pertaining to the user query is retrieved from an associated database from a plurality of databases based on an associated plurality of database queries and a classification information using an output orchestrator. The retrieved data is in one of a) structured data format and b) an unstructured data format, wherein the retrieved data comprises one of a) general information b) an anomaly information and c) a log information. The anomaly information is used to identify a critical alarm and to take appropriate actions. The plurality of databases comprises timeseries databases and relational databases. The structured and unstructured data is then employed to detect any anomalies and provide diagnosis using appropriate ML or DL algorithms. Finally, the retrieved data is displayed to the user by converting into a user readable format using an associated data conversion technique. The unstructured data format is converted into user readable format using an appropriate NLP technique and the structured timeseries data is converted to text, tables and graphs. The working of the components of system 100 are explained with reference to the method steps depicted in FIG. 2.

FIG. 2 is an exemplary flow diagram illustrating a method 200 for AI based alarm management implemented by the system of FIG. 1A and 1B, according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of method 200 of the present disclosure will now be explained with reference to the components or blocks of system 100 as depicted in FIG. 1A and 1B and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types. The method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

Now referring to FIG. 2, at step 202 of method 200, a user interface module 120 (shown in FIG. 1B) when executed by the one or more hardware processors 102 are configured by the programmed instructions to receive a user query associated with an industry automation system, wherein the user query is in Natural Language (NL). For example, the user query can be "What was the daily average temperature recorded for Pump A in the last 1 Week?".

At step 204 of the method 200, a user query classification module 122 (shown in FIG. 1B), when executed by the one or more hardware processors 102 is configured by the programmed instructions to classify the user query into one of a) data request query b) an anomaly detection and diagnosis query c) a log request query and d) a feedback for previous response using a query classifier. For example, the user query "What was the daily average temperature recorded for Pump A in the last 1 Week?" is classified as a data request query. "Was there any issue detected for Heat Exchanger B yesterday?" is classified as an anomaly detection query. "What were the comments entered by the Shift Operator in Shift Log in previous shift?" is classified as a log request query. "The anomaly diagnosis and diagnostics results are incorrect" is classified as a feedback query for results presented by the method for anomaly detection.

At step 206 of the method 200, an NLQ to timeseries database query generator module 124 (shown in FIG. 1B) when executed by the one or more hardware processors 102 is configured by the programmed instructions to simultaneously convert the user query into an associated timeseries query representation using a sequence-to-sequence model.

For example, the timeseries data captures measurements of a variable over successive time intervals, with each data point tagged with its associated timestamp. Mathematically, a timeseries is a temporally ordered set of $n$ sensors (variables) and $T$ discrete equidistant time instants, which can be denoted by $X=\{x^1, x^2, x^3, \ldots, x^{T}\}$ where $x^t \in R^{nx1}$ indicates **n** types of measurements at time step $t$ of $T$. If n = 1, then it is univariate, otherwise, it is multivariate (n > 1).

For example, the timeseries query representation includes a plurality of columns to be selected in a timeseries database, a plurality of table names, a plurality of filtering constraints, a data aggregation information, an ordering, a limiting data, an asset name, a plurality of date ranges and a classification information.

For example, the timeseries query representation for the user query "What was the daily average temperature recorded for Pump A in the last 1 Week?" using input as Sensor_Data (TIMESTAMP, ASSET_ID, SENSOR_1, SENSOR_2, ...)| Alarms_Table (TIMESTAMP, ASSET_ID, ALARM, ... ) | Asset_Hierarchy (ASSET_ID, PARENT) is Columns: MEAN(Temperature) | Table Name: Sensor_Data | Filters: ASSET_ID = 'Pump A' | Aggregation: TIME(1D) | ASSET: 'Pump A | Date Range: NOW() - 7D | Classification: Tablular.

At step 208 of the method 200 the NLQ to timeseries to database query generator 124 (shown in FIG. 1B) when executed by the one or more hardware processors 102 is configured by the programmed instructions to generate a plurality of database queries based on the timeseries query representation using a query generator. The plurality of database queries comprises a multivariate timeseries database query and a relational database query.

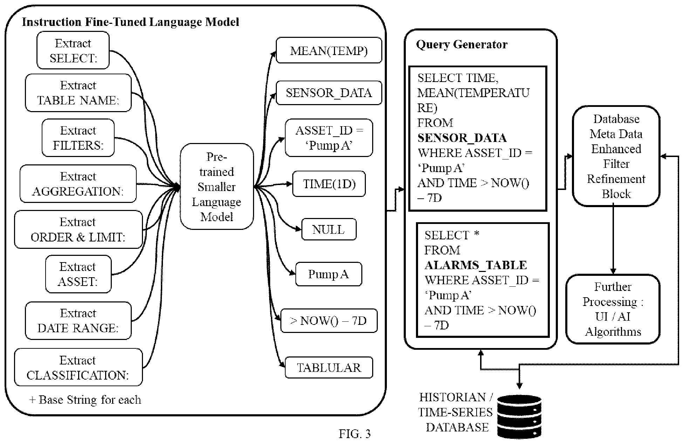

FIG. 3 illustrates an example architecture for converting NL query to timeseries database query and relational database query for the processor implemented method for AI based alarm management, in accordance with some embodiments of the present disclosure. Now referring to FIG. 3, the architecture includes a finetuned small language model comprising an encoder and a decoder. The decoder output is fed first to a query generator block, which combines the multi-task decoder output to generate timeseries Database queries for sensors and a relational database query alarm/event tables. Further, this query is fed to a Database Meta Data Enhanced Column Refinement Block to refine the Query Filter and Select Column values so that the hallucinations of the decoder do not impact the query output. This block uses cosine similarity of the decoder output to the metadata / unique data in respective columns. It replaces the decoder output filter condition with the database's corresponding metadata / unique data. This vastly improves the accuracy of the model. The output of the queries is then used to either revert the sensor and alarm/events data to the user or by the downstream AI algorithms to perform further analysis like Anomaly Detection and Diagnosis.

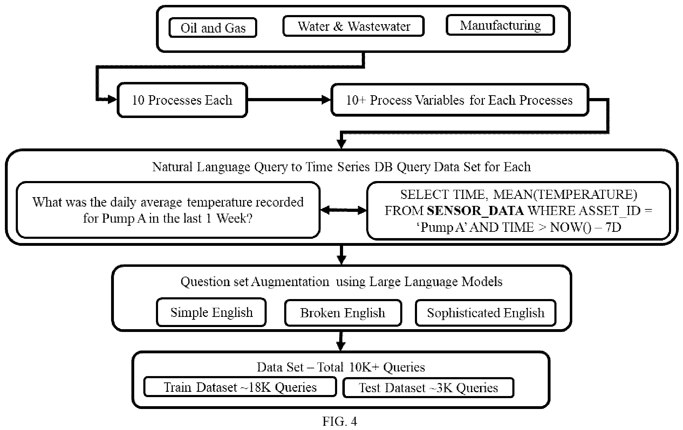

FIG. 4 illustrates an example flow diagram for creating the training dataset for training the Small Language Model for the processor implemented method for AI based alarm management, in accordance with some embodiments of the present disclosure. A list of 20 different Industries is identified, and 10 Processes are further identified for each. Industries selected are Mining, Manufacturing, Power Generation, Oil - Gas, Aerospace, Agriculture, Automotive, Building Automation, Chemical, Defense, Food - Beverage, Healthcare, Pharmaceutical, Pulp - Paper, Renewable Energy, Steel, Telecommunications, Transportation, Utilities, Water - Wastewater. Further, at least ten process variables are obtained for each process and create a dataset of Natural Language Query that the Operator might ask about the Process, define the Timeseries Database Schema and map the User Queries to their corresponding Timeseries Database Query as shown in Table I. It was ensured that the User Queries cover various outputs, like Average, Max, Min, Top K, etc. Further, the user queries are augmented using Large Language Model APIs to convert the queries to different English representations: In Simple English, using complex English words and into Broken English.

Table I

| Industry | Process | Process Variables |
|---|---|---|
| **Manufacturing** | Assembly | Temperature, Pressure, Level, Flow rate, RPM (Revolutions per minute), Weight, Vibration, Voltage, Current, Humidity |
| **Mining** | Blasting | Drilling depth, Fuel consumption, Rock hardness, Drill bit diameter, Drill rig rotation speed, Water flow rate, Air pressure, Blasting agent quantity, Explosive charge weight, Delay interval |
| **Oil** - **Gas** | Drilling | Pressure, Temperature, Flowrate, Level, Density, Viscosity, Composition, pH, Conductivity, Dissolved Oxygen |
| **Steel** | Annealing | Temperature, Pressure, Flow Rate, Humidity, Gas Composition, Time, Cooling Rate, Heating Rate, Annealing Time, Conveyor Speed |
| **Utilities** | Electricity distribution | Voltage, Current, Power Factor, Frequency, Load, Energy Consumption, Transformer Temperature, Line Temperature, Breaker Status, Fault Alarms |
| **Water** - **Wastewater** | Filtration | Flow rate, Pressure, Temperature, pH level, Turbidity, Conductivity, Suspended solids concentration, Dissolved oxygen level, Chlorine dosage, Pump speed |

Table II illustrates the examples of the Data Augmentation done using external a Large Language Model:

Table II

| User Query | Data Augmentation (Simple, Sophisticated and Broken English) |
|---|---|
| How many instances of power consumption exceeding 1000W were recorded for Asset_2 in the last seven days? | For Asset_2 in the past seven days, how many instances were there where power consumption exceeded 1000W |
|  | In the last seven days, how many times was power consumption for Asset_2 recorded to be over 1000W? |
|  | How many instances of power usage exceeding 1000W were recorded for Asset_2 during the past seven days? |
| Are there any critical events recorded for Asset_G? | Are there any essential incidents documented for Asset_G? |
|  | Could you provide information on any significant occurrences involving Asset_G? |
|  | Are there any critical events noted for Asset_G? |

(continued)

| User Query | Data Augmentation (Simple, Sophisticated and Broken English) |
|---|---|
| How many conductivity readings were recorded between '06/11/2015 02:50 AM' and '07/20/2018 06:16 PM'? | How many conductivity readings were taken between '06/11/2015 02:50 AM' and '07/20/2018 06:16 PM'? |
| | Could you provide the count of conductivity readings captured between '06/11/2015 02:50 AM' and '07/20/2018 06:16 PM'? |
| | How many readings were there of conductivity between '06/11/2015 02:50 AM' and '07/20/2018 06:16 PM'? |
| List the minimum temperature, pump speed, and torque for each asset between '06/14/2018 11:33 PM' and '09/01/2018 02:45 PM'. | Please provide the minimum temperature, pump speed, and torque for each asset from '06/14/2018 11:33 PM' to '09/01/2018 02:45 PM'. |
| | Retrieve the minimum temperature, pump speed, and torque for each asset within '06/14/2018 11:33 PM' and '09/01/2018 02:45 PM'. |
| | It is requested that you furnish the minimum temperature, pump speed, and torque for each asset from '06/14/2018 11:33 PM' to '09/01/2018 02:45 PM'. |
| How does the average current vary monthly for Asset5? | Can you tell me how the monthly variation of average current occurs for 'Asset5'? |
| | Could you elaborate on the fluctuation of the average current every month for 'Asset5'? |
| | What is the monthly variation in average current for 'Asset5' concerns? |

At step 210 of the method 200, an output orchestrator module 126 (shown in FIG 1B) when executed by the one or more hardware processors 102 is configured by the programmed instructions to retrieve a data pertaining to the user query from an associated database from a plurality of databases based on an associated plurality of database queries and a classification information. The retrieved data is in one of a) structured data format and b) an unstructured data format. The retrieved data includes one of a) general information b) an anomaly information and c) log information.

Anomaly information is used to identify a critical alarm and to take appropriate actions. For example, if there is a flow and pressure sensor data coming in and corresponding alarms. Now, it might be normal to say that flow rises, pressure rises. If they go above a value, it will raise an alarm. However, this alarm is not critical since the rise in flow and pressure together is expected. However, if the flow does not rise and pressure rises, the same alarm will be raised. In such a scenario, the present disclosure detects this as abnormal behavior since flow was not rising. So, an anomaly is detected, and the raised alarm is identified as critical.

The plurality of databases includes a time series database and a relational database. The timeseries data is retrieved from the timeseries databases and unstructured contextual information is retrieved from relational databases, wherein the unstructured contextual information comprises alarms and events.

The output orchestrator module 126 then decides based on the output of the User Query Classifier, whether to call the AI Algorithms for data analysis. For example, there can be a request from the user to detect and diagnose anomalies. An anomaly in time series data denotes an observation deviating significantly from expected system behavior. Detecting such anomalies is crucial for fault diagnosis and predictive maintenance, particularly in industrial assets. Anomaly detection enables timely preventive or corrective actions by identifying deviations from regular patterns. These anomalies in timeseries data exhibit distinct forms, categorized based on their departure from dominant trends along with have explained the types in detail along with mathematical explanations.

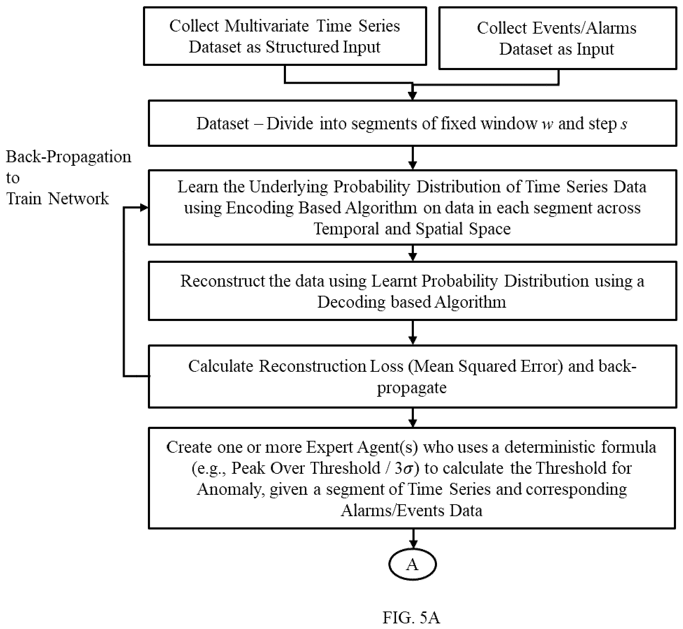

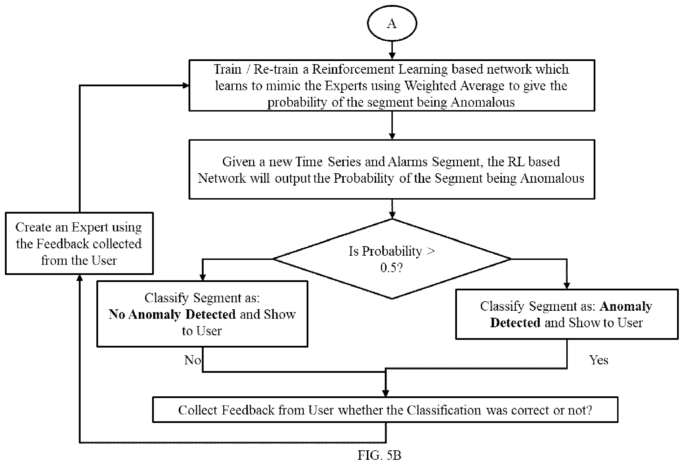

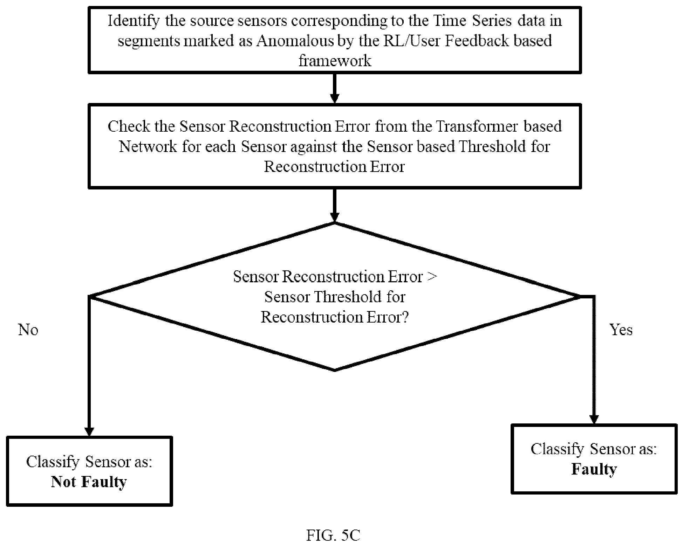

The steps for retrieving the anomaly information based on the associated plurality of database queries and a classification information using a deep neural network-based model includes the following steps and is explained in conjunction with FIG. 5A, 5B and 5C which illustrates an example flow diagram for anomaly detection for the processor implemented method for AI based alarm management, in accordance with some embodiments of the present disclosure.

For example, given a user query $Q$ in natural language, the query $Q$ may require the system to detect Anomalies using the retrieved timeseries data $X$ and $E$. Defining $X$ in matrix form,

$$X_{nxT} = \begin{bmatrix} x_1[0] & x_2[0] & \cdots & x_n[0] \\ x_1[1] & x_2[1] & \cdots & x_n[1] \\ \vdots & \vdots & \ddots & \vdots \\ x_1[T-1] & x_2[T-1] & \cdots & x_n[T-1] \end{bmatrix} \ldots\ldots(1)$$

Meanwhile, $E$ will be a collection of $m$ text-based data at each of $t$ of $T$ timesteps, for each of $n$ sensors. Then, the goal of the unsupervised timeseries anomaly detection, is to find a set of anomalous time segments $A_{seq} = \{a_{seq}^1, a_{seq}^2, ..., a_{seq}^k\}$, where $a_{seq}^i$ is a continuous sequence of data points in time which shows anomalous or unusual behavior within the time period T using the Structured Timeseries Dataset $X$ and Unstructured Discrete Alarms and Events Dataset $E$. Then, $A_{seq}$ will be a list of n×k Matrices (0 or many):

$$A_{seq0\ nxk} = \begin{bmatrix} x_1[s_0 0] & x_2[s_0 0] & \cdots & x_n[s_0 0] \\ x_1[s_0 1] & x_2[s_0 1] & \cdots & x_n[s_0 1] \\ \vdots & \vdots & \ddots & \vdots \\ x_1[s_0 k] & x_2[s_0 k] & \cdots & x_n[s_0 k] \end{bmatrix}, \ldots\ldots\ldots(2)$$

$$A_{seq1\ nxk} = \begin{bmatrix} x_1[s_1 0] & x_2[s_1 0] & \cdots & x_n[s_1 0] \\ x_1[s_1 1] & x_2[s_1 1] & \cdots & x_n[s_1 1] \\ \vdots & \vdots & \ddots & \vdots \\ x_1[s_1 k] & x_2[s_1 k] & \cdots & x_n[s_1 k] \end{bmatrix} \ldots\ldots\ldots\ldots(3)$$

This would also need sequence X's historical timeseries data for training the model and detecting anomalies. The goal is also to build an algorithm to ensure reduction of the false positives since a higher number of false positives will not create trust for the operator to use the system.

Now referring to FIG. 5A, initially, the multivariate timeseries dataset and the plurality of unstructured contextual information are received. Further, the multivariate time series dataset and unstructured contextual information of alarms and events are segmented based on a predefined window size and a predefined step size. For example, the timeseries data $x_t$ is segmented using windows $W_t$ of size $w$ with a step size $s = 1$. This is a multivariate dataset and hence has the dimension $d$. hence a 'w x d' vector set is obtained for training. This builds up our training and testing dataset.

Post segmenting, a plurality of spatial features and a plurality of temporal features are extracted from the segmented multivariate timeseries dataset using a deep neural network.

Further, the anomaly information associated with the industry automation system is identified based on the plurality of spatial features and the plurality of temporal features using a trained Deep Neural Network (DNN).

The DNN is trained by computing a reconstruction loss by reconstructing a multivariate timeseries data for each feature based on a plurality of spatial features and a plurality of temporal features extracted from a training dataset using the deep neural network, wherein the reconstruction loss is backpropagated to the deep neural network. The sensor reconstruction error for each sensor is calculated as one of the absolute difference, squared difference and percentage absolute difference between the original and reconstructed data for each sensor. Equations used for calculating each of these errors is given below:

Absolute difference reconstruction error for each sensor

$$RES_{i,j} = \left| X_{i,j} - X'_{i,j} \right| - (4)$$

Squared difference reconstruction error for each sensor

$$RES_{i,j} = \left( X_{i,j} - X'_{i,j} \right)^2 - (5)$$

Percentage difference reconstruction error for each sensor

$$RES_{i,j} = \frac{\left| X_{i,j} - X'_{i,j} \right|}{X_{i,j}} \times 100 - (6)$$

where $RES_{i,j}$ is the reconstruction error value for instance or time $i$ for sensor $j$ $X_{i,j}$ is the original value of sensor $j$ at instance or time $i$ $X'_{i,j}$ is the reconstructed value of sensor $j$ at instance or time $i$

Further, the threshold responsible to determine the anomalous data points of plurality of sensors is identified using multiple methods:

a. The threshold for the reconstruction error, beyond which the instance is classified as anomalous, is obtained as $\mu + K\sigma$ where $\mu$ and $\sigma$ are the mean and standard deviation of all the reconstruction errors and $K$ is a user-defined parameter such that 95% or 99% of the reconstruction error values are lower than the threshold of reconstruction error.
b. The peak over threshold method can be used where all the reconstruction errors are sorted ascending by value and value corresponding to top K percentile can be taken as threshold. This K is a user-defined parameter such that 95% or 99% of the data points of plurality of sensors by percentile are lower than the threshold of reconstruction error. The peal over threshold method can also be a dynamic method where the thresholds are calculated in a rolling manner, segment by segment instead of considering all the data points together.
c. Or any other suitable deterministic method which can help us to identify the data points where it shows that the points are not correctly reconstructed, meaning the input point is not form the original data distribution.

Now referring to FIG. 5B, further, a Reinforcement Learning (RL) Agent is trained using a Deep Reinforcement Learning (DRL) network, wherein it learns from RL "Experts" who, given a dataset segment, can determine if the last data point was anomalous or not based on the timeseries data and the plurality of events by giving the output as the probability of the last time segment being anomalous. The DRL network can include a plurality of Reinforced Learning (RL) Experts wherein their output can be taken as a weighted average to train the RL Agent. The plurality of RL Experts initially utilizes one of the deterministic formula as explained above. The method then, may report the same to one or more users in any appropriate format preconfigured. The method then allows the user to provide feedback on each data points whether the provided anomaly result was correct or not and allows to store the details in one or more databases in the memory module(s) 104. For example, the system may display any text or color based indicator against the time stamp, via an appropriate user interface 112, so that the user may be able to understand whether there was any anomaly or not in the values/data generated by each of the sensors and provide option to mark the prediction as correct or not. The system can then model another algorithm or also called an 'Expert' who will now mimic the user feedback which was stored in one or more databases in the memory module(s) 103. The system then trains the RL Agent again, but this time, also considering the User Feedback Expert response in addition to the earlier existing Experts using a weighted average mechanism. This allows the RL Agent to also learn how to reduce the False Positives and False Negatives, by learning the feedback given by the user, who would be an expert in the field.

Further, referring to Fig. 5C, the steps for identifying a root cause for the anomaly request based on the generated multivariate timeseries database query and the plurality of unstructured contextual information using a deep neural network-based model includes the following. Initially, a plurality of source sensors are identified based on the anomaly information, wherein anomaly information comprises a plurality of potential anomalous timeseries data, and wherein the plurality of sensors associated with the plurality of potential anomalous timeseries data are identified as the plurality of source sensors. Further, a sensor reconstruction error is computed for each of the plurality of source sensors based on a predefined sensor reconstruction error threshold using the deep Neural Network. Finally, at least one anomalous sensor is identified from among the plurality of source sensors based on the sensor reconstruction error, to provide the root cause of the anomaly that would help in diagnosis. This, in turn, enables the operator to decide whether a particular alarm is critical or non-critical, and take appropriate actions.

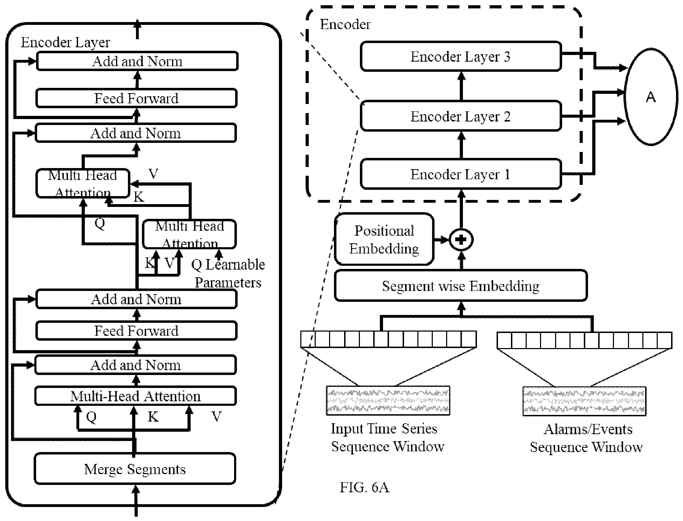

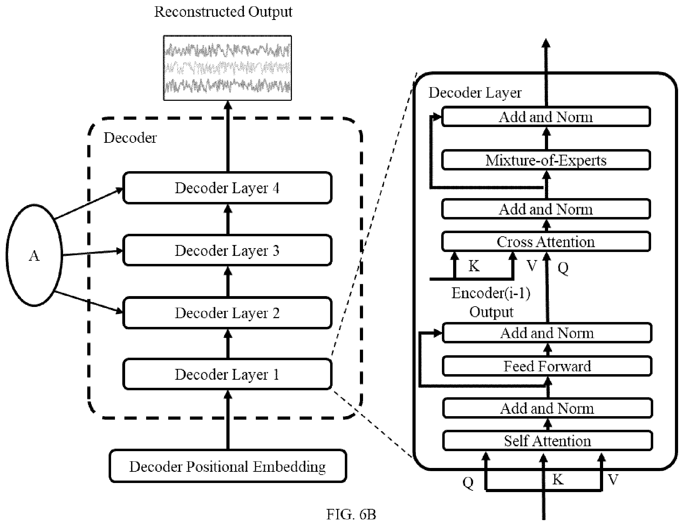

FIGS. 6A and 6B illustrate an example encoder-decoder architecture of deep neural network for the processor implemented method for AI based alarm management, in accordance with some embodiments of the present disclosure. Now referring to FIG. 6A and 6B, the output of the encoder is a contextual representation of the input sequence, capturing the spatial and temporal relationship of the timeseries data. The decoder takes the encoded representation from the encoder and tries to reconstruct the input timeseries.

At step 212 of the method 200, the an output orchestrator module 128 (shown in FIG. 1B) when executed by the one or more hardware processors 102 is configured by the programmed instructions to display the retrieved data or the output of the anomaly detection and diagnosis or any other output requested by user to the user by converting into a user readable format using an associated data conversion technique, wherein the unstructured data format is converted into user readable format using NLP technique and the structured timeseries data is converted in the form of text, tables and graphs.

**Experimentation:** Referring to FIG. 3, the present disclosure used pytorch, huggingface transformers and lighting libraries to implement the sequence-to-sequence model. Experiments are carried out using different base language model types, fine-tuning strategies and input data augmentation. The training sequences are divided into an appropriate number of multiple-tasks per the required representation, for example 8, and train the models in one go using a methodology such as Instruction Fine Tuning for the Multi-Tasks approach. The input data is further augmented using external Large Language Models with a suitable probability of augmenting a user query, for example 0.6, which helps the model learn the context better.

The decoder output is used by a Timeseries Query Generator Block, which is written in Python. This block combines the output of the eight multi-tasks to form the required Sensors and Events/Alarms Query. Further, the queries are optimized by the Database Meta Data Enhanced Column Refinement Block to refine the Query Filter and Select Column values so that the hallucinations of the decoder do not impact the query output. If the output of the 'Extract WHERE:' Multi-Task is 'Where Asset_Id = 'PumpA'', the distinct of Asset_Id is taken from the Table Name which was returned by the Extract 'TABLE NAME:' Multi-Task. Say this returns 'Pump A', 'Pump B' and 'Pump C'. A cosine similarity search of 'PumpA' is performed on the data returned by the Distinct and pick the value with the highest similarity. Here, 'Pump A' will be selected. Hence, our final query will use the clause as 'Where Asset_Id = 'Pump A''.

Ablation study was performed, and it was observed that instruction fine-tuning provides better accuracy for small language models than models that try to create entire queries in one go. Increasing the model's size might improve performance as larger models may learn the whole sequence.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address the unresolved problem of AI based alarm management. The present disclosure provides NL based user queries conversion to database queries to retrieve the required information from Historians based on the Control Room Operator query. Further, the present disclosure provides unsupervised timeseries anomaly detection which utilizes Generative AI based algorithms to detect Anomalies in timeseries data. Furthermore, the present disclosure is able to identify and distinguish critical alarms from non-critical alarms.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means, and software means. The method embodiments described herein could be implemented in hardware and software. The device may also include software means. Alternatively, the embodiments may be implemented on different hardware devices, e.g., using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor-implemented method (200), the method comprising:

receiving (202), via one or more hardware processors, a user query associated with an automation system, wherein the user query is in Natural Language (NL);
classifying (204), via the one or more hardware processors, the user query into one of a) data request query b) an anomaly detection and diagnosis query c) a log request query and d) a feedback for previous response using a query classifier;
simultaneously converting (206), via the one or more hardware processors, the user query into an associated timeseries query representation using a sequence-to-sequence model;
generating (208), via the one or more hardware processors, a plurality of database queries based on the timeseries query representation using query generator, wherein the plurality of database queries comprises a multivariate timeseries database query and a relational database query;
retrieving (210), via the one or more hardware processors, a data pertaining to the user query from an associated database from a plurality of databases based on an associated plurality of database queries and a classification information, wherein the retrieved data is in one of a) structured data format and b) an unstructured data format, wherein the retrieved data comprises one of a) a general information b) an anomaly information and c) a log information, wherein the plurality of databases comprises a timeseries databases and a relational database, and wherein the anomaly information is used to identify a critical alarm and to take appropriate actions; and
displaying (212), via the one or more hardware processors, the retrieved data to the user by converting into a user readable format using an associated data conversion technique, wherein the unstructured data format is converted into user readable format using a Natural Language Processing (NLP) technique and the structured timeseries data is converted in the form of text, tables and graphs.

2. The method as claimed in claim 1, wherein retrieving the anomaly information based on the associated plurality of database queries and the classification information, by a deep neural network-based model, comprises:

receiving the multivariate timeseries dataset and the plurality of unstructured contextual information;
segmenting the multivariate timeseries dataset and unstructured contextual information of alarms and events based on a predefined window size and a predefined step size;
extracting a plurality of spatial features and a plurality of temporal features from the segmented multivariate timeseries dataset using a Deep Neural Network (DNN);
identifying the anomaly information associated with the industry automation system based on the plurality of spatial features and the plurality of temporal features using a trained Deep Reinforcement Learning (DRL) network, wherein the DRL network is trained by:

computing a reconstruction loss by reconstructing a multivariate timeseries data based on a plurality of spatial features and a plurality of temporal features extracted from a training dataset using the DNN, wherein the reconstruction loss is backpropagated to the DNN;
simultaneously computing an anomaly threshold based on the timeseries data and the plurality of events by creating a DRL network comprising a plurality of Reinforced Learning (RL) agents, wherein the plurality of RL agents utilizes a deterministic formula; and
re-training the DRL network to identify anomalous behavior using a weighted average mechanism based on the control room user feedback.

3. The method as claimed in claim 2, wherein the steps for identifying a root cause for the anomaly information based on the generated multivariate timeseries database query and the plurality of unstructured contextual information using the deep neural network-based model comprises:

identifying a plurality of source sensors based on the anomaly information, wherein anomaly information comprises a plurality of potential anomalous timeseries data, and wherein the plurality of sensors associated with the plurality of potential anomalous timeseries data are identified as the plurality of source sensors;
computing a sensor reconstruction error for each of the plurality of source sensors based on a predefined sensor reconstruction error threshold using the DNN; and

identifying at least one anomalous sensor from among the plurality of source sensors based on the sensor reconstruction error.

4. The method as claimed in claim 1,

wherein the timeseries query representation comprises a plurality of columns to be selected in a timeseries database, a plurality of table names, a plurality of filtering constraints, a data aggregation information, an ordering, a limiting data, an asset name, a plurality of date ranges and a classification information; and
wherein the timeseries data is retrieved from the timeseries databases and an unstructured contextual information is retrieved from relational databases, wherein the unstructured contextual information comprises alarms and events.

5. The method as claimed in claim 1, wherein user feedback is obtained for the retrieved data from the user and stored in the relation database, and wherein the user feedback is utilized in re-training the DRL network.

6. A system (100) comprising:
at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:

receive a user query associated with an automation system, wherein the user query is in Natural Language (NL);
classify the user query into one of a) data request query b) an anomaly detection and diagnosis query c) a log request query and d) a feedback for previous response using a query classifier;
simultaneously convert the user query into an associated timeseries query representation using a sequence-to-sequence model;
generate a plurality of database queries based on the timeseries query representation using query generator, wherein the plurality of database queries comprises a multivariate timeseries database query and a relational database query;
retrieve a data pertaining to the user query from an associated database from a plurality of databases based on an associated plurality of database queries and a classification information, wherein the retrieved data is in one of a) structured data format and b) an unstructured data format, wherein the retrieved data comprises one of a) a general information b) an anomaly information and c) a log information, wherein the plurality of databases comprises a timeseries databases and a relational database, and wherein the anomaly information is used to identify a critical alarm and to take appropriate actions; and
display the retrieved data to the user by converting into a user readable format using an associated data conversion technique, wherein the unstructured data format is converted into user readable format using a Natural Language Processing (NLP) technique and the structured timeseries data is converted in the form of text, tables and graphs.

7. The system of claim 6, wherein retrieving the anomaly information based on the associated plurality of database queries and the classification information by a deep neural network-based model comprises:

receiving the multivariate timeseries dataset and the plurality of unstructured contextual information;
segmenting the multivariate timeseries dataset and unstructured contextual information of alarms and events based on a predefined window size and a predefined step size;
extracting a plurality of spatial features and a plurality of temporal features from the segmented multivariate timeseries dataset using a Deep Neural Network (DNN);
identifying the anomaly information associated with the industry automation system based on the plurality of spatial features and the plurality of temporal features using a trained Deep Reinforcement Learning (DRL) network, wherein the DRL network is trained by:

computing a reconstruction loss by reconstructing a multivariate timeseries data based on a plurality of spatial features and a plurality of temporal features extracted from a training dataset using the DNN, wherein the reconstruction loss is backpropagated to the DNN;
simultaneously computing an anomaly threshold based on the timeseries data and the plurality of events by creating a DRL network comprising a plurality of Reinforced Learning (RL) agents, wherein the plurality of RL agents utilizes a deterministic formula; and
re-training the DRL network to identify anomalous behavior using a weighted average mechanism based on the control room user feedback.

8. The system of claim 7, wherein identifying a root cause for the anomaly information based on the generated multivariate timeseries database query and the plurality of unstructured contextual information using the deep neural network-based model comprises:

identifying a plurality of source sensors based on the anomaly information, wherein anomaly information comprises a plurality of potential anomalous timeseries data, and wherein the plurality of sensors associated with the plurality of potential anomalous timeseries data are identified as the plurality of source sensors;

computing a sensor reconstruction error for each of the plurality of source sensors based on a predefined sensor reconstruction error threshold using the deep Neural Network; and

identifying at least one anomalous sensor from among the plurality of source sensors based on the sensor reconstruction error.

9. The system of claim 7,

wherein the timeseries query representation comprises a plurality of columns to be selected in a timeseries database, a plurality of table names, a plurality of filtering constraints, a data aggregation information, an ordering, a limiting data, an asset name, a plurality of date ranges and a classification information; and

wherein the timeseries data is retrieved from the timeseries databases and an unstructured contextual information is retrieved from relational databases, wherein the unstructured contextual information comprises alarms and events.

10. The system of claim 6, wherein user feedback is obtained for the retrieved data from the user and stored in the relation database, and wherein the user feedback is utilized in re-training the DRL network.

11. One or more non-transitory machine-readable information storage mediums comprising one or more instructions which when executed by one or more hardware processors cause:

receiving a user query associated with an automation system, wherein the user query is in Natural Language (NL);

classifying the user query into one of a) data request query b) an anomaly detection and diagnosis query c) a log request query and d) a feedback for previous response using a query classifier;

simultaneously converting the user query into an associated timeseries query representation using a sequence-to-sequence model;

generating a plurality of database queries based on the timeseries query representation using query generator, wherein the plurality of database queries comprises a multivariate timeseries database query and a relational database query;

retrieving a data pertaining to the user query from an associated database from a plurality of databases based on an associated plurality of database queries and a classification information, wherein the retrieved data is in one of a) structured data format and b) an unstructured data format, wherein the retrieved data comprises one of a) a general information b) an anomaly information and c) a log information, wherein the plurality of databases comprises a timeseries databases and a relational database, and wherein the anomaly information is used to identify a critical alarm and to take appropriate actions; and

displaying the retrieved data to the user by converting into a user readable format using an associated data conversion technique, wherein the unstructured data format is converted into user readable format using a Natural Language Processing (NLP) technique and the structured timeseries data is converted in the form of text, tables and graphs.

12. The one or more non-transitory machine-readable information storage mediums of claim 11, wherein retrieving the anomaly information based on the associated plurality of database queries and the classification information, by a deep neural network-based model, comprises:

receiving the multivariate timeseries dataset and the plurality of unstructured contextual information;

segmenting the multivariate timeseries dataset and unstructured contextual information of alarms and events based on a predefined window size and a predefined step size;

extracting a plurality of spatial features and a plurality of temporal features from the segmented multivariate timeseries dataset using a Deep Neural Network (DNN);

identifying the anomaly information associated with the industry automation system based on the plurality of spatial features and the plurality of temporal features using a trained Deep Reinforcement Learning (DRL) network, wherein the DRL network is trained by:

computing a reconstruction loss by reconstructing a multivariate timeseries data based on a plurality of spatial features and a plurality of temporal features extracted from a training dataset using the DNN, wherein the reconstruction loss is backpropagated to the DNN;

simultaneously computing an anomaly threshold based on the timeseries data and the plurality of events by creating a DRL network further comprising a plurality of Reinforced Learning (RL) agents, wherein the plurality of RL agents utilizes a deterministic formula; and

re-training the DRL network to identify anomalous behavior using a weighted average mechanism based on the control room user feedback.

13. The one or more non-transitory machine-readable information storage mediums of claim 12, wherein the steps for identifying a root cause for the anomaly information based on the generated multivariate timeseries database query and the plurality of unstructured contextual information using the deep neural network-based model comprises:

identifying a plurality of source sensors based on the anomaly information, wherein anomaly information comprises a plurality of potential anomalous timeseries data, and wherein the plurality of sensors associated with the plurality of potential anomalous timeseries data are identified as the plurality of source sensors;

computing a sensor reconstruction error for each of the plurality of source sensors based on a predefined sensor reconstruction error threshold using the DNN; and

identifying at least one anomalous sensor from among the plurality of source sensors based on the sensor reconstruction error.

14. The one or more non-transitory machine-readable information storage mediums of claim 11,

wherein the timeseries query representation comprises a plurality of columns to be selected in a timeseries database, a plurality of table names, a plurality of filtering constraints, a data aggregation information, an ordering, a limiting data, an asset name, a plurality of date ranges and a classification information; and

wherein the timeseries data is retrieved from the timeseries databases and an unstructured contextual information is retrieved from relational databases, wherein the unstructured contextual information comprises alarms and events.

15. The one or more non-transitory machine-readable information storage mediums of claim 11, wherein user feedback is obtained for the retrieved data from the user and stored in the relation database, and wherein the user feedback is utilized in re-training the DRL network.

100

MEMORY <u>104</u>

MODULES <u>106</u>

REPOSITORY <u>110</u>

108

I/O INTERFACE
<u>112</u>

HARDWARE
PROCESSORS
<u>102</u>

FIG. 1A

**User Interface 120**

| User Query in Natural Language – Text/Voice | Output: Table / Graph |

1b. Database Meta Data

**Natural Language Query Processor**

**NLQ to Time Series DB Query Generator 124**

User Query in Natural Language To Time Series Query Representation *R*

Time Series Query Representation *R* to Time Series DB Query Generator

Time Series & Relational Database

**AI Algorithms Plugins 128**

Anomaly Detection/ Diagnosis

5. Get Dataset

4. Query DB

1. User Query

6. Pass TS Dataset

7. Get Results

2. TS DB Query

**User Query Classifier 122**
Classifies whether the User is asking for:
1. Information (KPI/Graph/Table)
2. Anomaly Detection
3. Log Summarizer
4. User Feedback
5. Or any other AI extension

1. User Query

3. Classifier Output

**Output Orchestrator 126**
1. Based on Classifier, and Query Generator output, fetches required data from Database
2. Calls any ML/DL Algorithm, if needed
3. Processes the data and returns back to UI

8. Return Output to UI

FIG. 1B

receive a user query associated with an automation system, wherein the user query is in Natural Language
_202_

↓

classify the user query into one of a) data request query b) an anomaly detection and diagnosis query c) a log request query and d) a feedback for previous response, using a query classifier
_204_

↓

simultaneously convert the user query into an associated time series query representation using a sequence-to-sequence model
_206_

↓

generate a plurality of database queries based on the timeseries query representation using query generator, wherein the plurality of database queries comprises a multivariate timeseries database query and a relational database query
_208_

↓

retrieve a data pertaining to the user query from an associated database from a plurality of databases based on an associated plurality of database queries and a classification information, wherein the retrieved data is in one of a) structured data format and b) an unstructured data format, wherein the retrieved data comprises one of a) a general information b) an anomaly information and c) a log information, wherein the plurality of databases comprises a timeseries databases and a relational database, and wherein the anomaly information is used to identify a critical alarm and to take appropriate actions
_210_

↓

display the retrieved data to the user by converting into a user readable format using an associated data conversion technique, wherein the unstructured data format is converted into user readable format using NLP technique and the structured time series data is converted in the form of text, tables and graphs
_212_

200 ⟶

**FIG. 2**

**Instruction Fine-Tuned Language Model**

- Extract SELECT:
- Extract TABLE NAME:
- Extract FILTERS:
- Extract AGGREGATION:
- Extract ORDER & LIMIT:
- Extract ASSET:
- Extract DATE RANGE:
- Extract CLASSIFICATION:

+ Base String for each

Pre-trained Smaller Language Model

- MEAN(TEMP)
- SENSOR_DATA
- ASSET_ID = 'Pump A'
- TIME(1D)
- NULL
- Pump A
- > NOW() – 7D
- TABLULAR

**Query Generator**

SELECT TIME,
MEAN(TEMPERATURE)
FROM
**SENSOR_DATA**
WHERE ASSET_ID =
'Pump A'
AND TIME > NOW()
– 7D

SELECT *
FROM
**ALARMS_TABLE**
WHERE ASSET_ID =
'Pump A'
AND TIME > NOW()
– 7D

Database Meta Data Enhanced Filter Refinement Block

Further Processing : UI / AI Algorithms

HISTORIAN / TIME-SERIES DATABASE

FIG. 3

Oil and Gas | Water & Wastewater | Manufacturing

10 Processes Each → 10+ Process Variables for Each Processes

Natural Language Query to Time Series DB Query Data Set for Each

What was the daily average temperature recorded for Pump A in the last 1 Week? ↔ SELECT TIME, MEAN(TEMPERATURE) FROM **SENSOR_DATA** WHERE ASSET_ID = 'Pump A' AND TIME > NOW() – 7D

Question set Augmentation using Large Language Models

Simple English | Broken English | Sophisticated English

Data Set – Total 10K+ Queries

Train Dataset ~18K Queries | Test Dataset ~3K Queries

FIG. 4

Back-Propagation to Train Network

```
┌─────────────────────────────┐   ┌─────────────────────────┐
│ Collect Multivariate Time   │   │ Collect Events/Alarms   │
│ Series Dataset as           │   │ Dataset as Input        │
│ Structured Input            │   │                         │
└─────────────────────────────┘   └─────────────────────────┘
```

Dataset – Divide into segments of fixed window $w$ and step $s$

Learn the Underlying Probability Distribution of Time Series Data using Encoding Based Algorithm on data in each segment across Temporal and Spatial Space

Reconstruct the data using Learnt Probability Distribution using a Decoding based Algorithm

Calculate Reconstruction Loss (Mean Squared Error) and back-propagate

Create one or more Expert Agent(s) who uses a deterministic formula (e.g., Peak Over Threshold / $3\sigma$) to calculate the Threshold for Anomaly, given a segment of Time Series and corresponding Alarms/Events Data

A

FIG. 5A

A

Train / Re-train a Reinforcement Learning based network which learns to mimic the Experts using Weighted Average to give the probability of the segment being Anomalous

Given a new Time Series and Alarms Segment, the RL based Network will output the Probability of the Segment being Anomalous

Create an Expert using the Feedback collected from the User

Is Probability > 0.5?

Classify Segment as: **No Anomaly Detected** and Show to User

Classify Segment as: **Anomaly Detected** and Show to User

No

Yes

Collect Feedback from User whether the Classification was correct or not?

FIG. 5B

Identify the source sensors corresponding to the Time Series data in segments marked as Anomalous by the RL/User Feedback based framework

Check the Sensor Reconstruction Error from the Transformer based Network for each Sensor against the Sensor based Threshold for Reconstruction Error

Sensor Reconstruction Error > Sensor Threshold for Reconstruction Error?

No

Yes

Classify Sensor as: **Not Faulty**

Classify Sensor as: **Faulty**

FIG. 5C

Encoder Layer

Add and Norm

Feed Forward

Add and Norm

Multi Head Attention — V

K

Q

Multi Head Attention

K V Q Learnable Parameters

Add and Norm

Feed Forward

Add and Norm

Multi-Head Attention

Q K V

Merge Segments

Encoder

Encoder Layer 3

Encoder Layer 2

Encoder Layer 1

A

Positional Embedding ⊕

Segment wise Embedding

Input Time Series Sequence Window

Alarms/Events Sequence Window

FIG. 6A

Reconstructed Output

Decoder

Decoder Layer 4

Decoder Layer 3

A

Decoder Layer 2

Decoder Layer 1

Decoder Positional Embedding

Decoder Layer

Add and Norm

Mixture-of-Experts

Add and Norm

Cross Attention

K          V    Q

Encoder(i-1)
Output

Add and Norm

Feed Forward

Add and Norm

Self Attention

Q                K          V

FIG. 6B

Europäisches
Patentamt

European
Patent Office

Office européen
des brevets

# EUROPEAN SEARCH REPORT

**Application Number**

EP 25 19 2031

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/202539 A1 (POIRIER LOUIS [FR] ET AL) 20 June 2024 (2024-06-20) | 1,2,4-7, 9-12,14, 15 | INV. G06F16/242 G06F16/2452 G06F16/2458 |
| A | * paragraphs [0056], [0103], [0157] - [0159], [0161] - [0162], [0177]; figures 7.10,17 * | 3,8,13 | |

-----

**TECHNICAL FIELDS SEARCHED (IPC)**

G06F

The present search report has been drawn up for all claims

| Place of search | Date of completion of the search | Examiner |
|---|---|---|
| The Hague | 24 November 2025 | Bercan, Radu |

EPO FORM 1503 03.82 (P04C01)

## ANNEX TO THE EUROPEAN SEARCH REPORT
## ON EUROPEAN PATENT APPLICATION NO.

EP 25 19 2031

This annex lists the patent family members relating to the patent documents cited in the above-mentioned European search report.
The members are as contained in the European Patent Office EDP file on
The European Patent Office is in no way liable for these particulars which are merely given for the purpose of information.

24-11-2025

| Patent document cited in search report | Publication date | Patent family member(s) | | Publication date |
|---|---|---|---|---|
| US 2024202539 A1 | 20-06-2024 | CN | 120615194 A | 09-09-2025 |
| | | CN | 120641878 A | 12-09-2025 |
| | | CN | 120660090 A | 16-09-2025 |
| | | CN | 120693607 A | 23-09-2025 |
| | | CN | 120770033 A | 10-10-2025 |
| | | EP | 4487247 A1 | 08-01-2025 |
| | | EP | 4634779 A1 | 22-10-2025 |
| | | EP | 4634789 A1 | 22-10-2025 |
| | | EP | 4634830 A1 | 22-10-2025 |
| | | EP | 4634837 A1 | 22-10-2025 |
| | | US | 2024202221 A1 | 20-06-2024 |
| | | US | 2024202225 A1 | 20-06-2024 |
| | | US | 2024202464 A1 | 20-06-2024 |
| | | US | 2024202539 A1 | 20-06-2024 |
| | | US | 2024202600 A1 | 20-06-2024 |
| | | US | 2024419713 A1 | 19-12-2024 |
| | | US | 2025094474 A1 | 20-03-2025 |
| | | US | 2025124069 A1 | 17-04-2025 |
| | | US | 2025131028 A1 | 24-04-2025 |
| | | US | 2025190475 A1 | 12-06-2025 |
| | | WO | 2024130215 A1 | 20-06-2024 |
| | | WO | 2024130219 A1 | 20-06-2024 |
| | | WO | 2024130220 A1 | 20-06-2024 |
| | | WO | 2024130222 A1 | 20-06-2024 |
| | | WO | 2024130232 A1 | 20-06-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421058403